Europäisches Patentamt

European Patent Office

Office européen des brevets

(11) Publication number: **0 264 832 B1**

(12) **EUROPEAN PATENT SPECIFICATION**

(45) Date of publication of patent specification: **30.12.92** (51) Int. Cl.⁵: **G01B 5/30**, G01B 7/16

(21) Application number: **87115096.7**

(22) Date of filing: **15.10.87**

(54) **Process and apparatus for monitoring laminate structural stability.**

(30) Priority: **16.10.86 US 919413**
**01.05.87 US 44687**

(43) Date of publication of application:
**27.04.88 Bulletin 88/17**

(45) Publication of the grant of the patent:
**30.12.92 Bulletin 92/53**

(84) Designated Contracting States:
**BE DE FR GB NL**

(56) References cited:
**DE-A- 2 837 945**
**GB-A- 1 276 718**
**US-A- 3 995 476**
**US-A- 4 211 013**

**DEUTSCHE GUTEGEMEINSCHAFT, Textboden DIN 54318, April 1986, Alleinverkauf der Normen Durch Beuth Verlag GmbH, Berlin, DE; "Bestimmung der Massänderung bei wechselnder Einwirkung von Wasser und Wärme"**

(73) Proprietor: **HERCULES INCORPORATED**
**Hercules Plaza**
**Wilmington Delaware 19894(US)**

(72) Inventor: **Goss, Raymond Walter**
**20 South Townview Lane Woodmere**
**Newark Delaware 19711(US)**

(74) Representative: **Lederer, Franz, Dr. et al**
**Lederer, Keller & Riederer Patentanwälte**
**Lucile-Grahn-Strasse 22**
**W-8000 München 80(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method and apparatus for measuring planar dimensional changes in flat, flexible materials, such as soft laminated carpet and carpet tile materials, when subjected to changes in ambient temperature and moisture.

It is very difficult to evaluate, under dynamic conditions, the structural integrity of such laminated materials, which may have relatively heavy extruded backings and relatively thick layers of adhesive (usualy hot-melt adhesives) between the backing and the exposed surface fiber layer ("primary" layer), in order to provide adequate weight, flexibility and structural strength.

Particularly when hot melt adhesives are used, it is usually necessary to pre-stretch the primary layer and the backing layer to smooth out wrinkles and obtain an even surface for the application of the adhesive and subsequent mating of the layers. The stretching step may cause flaws in the structural integrity and stability of the laminate, since the binders that anchor the pile fibers in the primary layers are unlikely to have the same elastic properties as the heavy tile backing and bonding adhesive layers.

Unless evaluated and corrected, these flaws may result in warpage of the finished tile and damage to the adhesive layers, which have insufficient shear strength to resist lateral stress between the component layers. Well-known tests such as the Aachner test (see Deutsche Gutegemeinschaft Texteleboden EV. VIN 54318), using statistical analyses of gross external measurements over a 100 hour test period, are rarely adequate to evaluate actual or potential structural defects effectively.

GB 1,276,718 discloses a method for the quantitative analysis of strain induced in a component subject to a load, for example, a component of an internal combustion engine. Although transducers similar to those described in the present invention are used in the measuring circuit, they are designed to measure the high levels of strain and torque of the engine parts. They are not accurate enough or sensitive enough for the delicate monitoring of micromovements of a carpet or carpet laminate.

There is therefore a need for a sensitive, fast and reliable device for testing and evaluating stresses imposed on the components of soft laminated bodies such as carpets and carpet tiles.

According to the invention, a method for evaluating the structural integrity and stability of such soft laminated bodies, including the steps of locating the laminated body on a rigid supporting surface, supporting a displacement sensor above the fixed lamination component, the sensor having a fixed element rigidly connected to a reference position fixed with respect to the laminated body and a displacable element rigidly linked to a dimensioning element, the sensor producing output that is responsive to displacement of the movable element relative to the fixed element, connecting the dimensioning element to the lamination component at a point spaced from the reference position, and recording indications of displacement that are output from the sensor, is characterized in that the laminated body is placed in a testing area on the support, the dimensioning element is connected to the laminated body by penetrating it to a predetermined depth by pointed probes projecting downward from the dimensioning element, the laminated body is exposed to change in ambient conditions in the testing area, and the recorded measure of displacement of the movable element is compared with standards representing structural characteristics within the laminated body.

The invention provides a testing procedure for evaluating stresses or residual tensions imposed on the components of soft laminated bodies such as carpet tile, and therefore their overall quality and stability. Preferably such tests are carried out with the tile in the face down position although the use of the method described is not so limited.

Also according to the invention, an apparatus for carrying out the above-defined method for evaluating the structural integrity of such soft laminated bodies, including a rigid testing area for the body to be evaluated, a sensor having a fixed element above and adapted to be rigidly connected to the laminated body by a supporting member located in a fixed reference position and a movable element rigidly connected to a dimensioning element, the sensor producing output that is responsive to displacement of the movable element, the dimensioning element being adapted to be connected to the the body to be evaluated at a point spaced from the support position, and recording means for storing the indications of displacement that are output from the sensor, is characterized in that a testing area is located on the support under the dimensioning element to receive the body to be evaluated, the dimensioning element includes a pointed probe projecting downward and adapted to penetrate the body to be evaluated to a predetermined depth, and temperature-controlling means are provided for adjusting the ambient temperature in the testing area.

Preferably, the fixed reference position is located inside the periphery of the testing area and is a pointed pin extending from the end of a supporting member and inserted through the layers of the laminated body to prevent relative movement between the sensor finger and the laminated body, the latter having a supporting collar or stop that is supported on the surface of the laminated body.

Also preferably, the three sensors and dimensioning elements are radially located on a sensor supporting plate having corresponding slots to slidably receive the linkages between the sensors and the dimensioning elements.

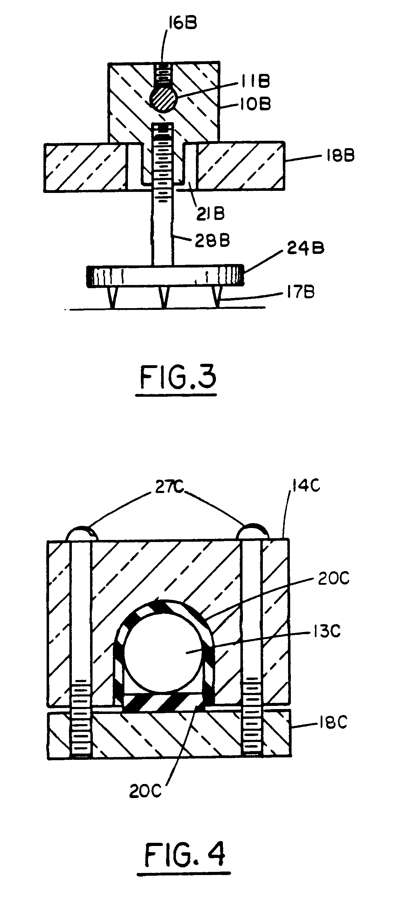

In the attached drawings, in which the same reference numeral refers to the same or similar element in the various figures and is supplemented by the letters A, B, C, etc. in Figures 2, 3, 4, etc., respectively to identify the figure referred to from time to time:

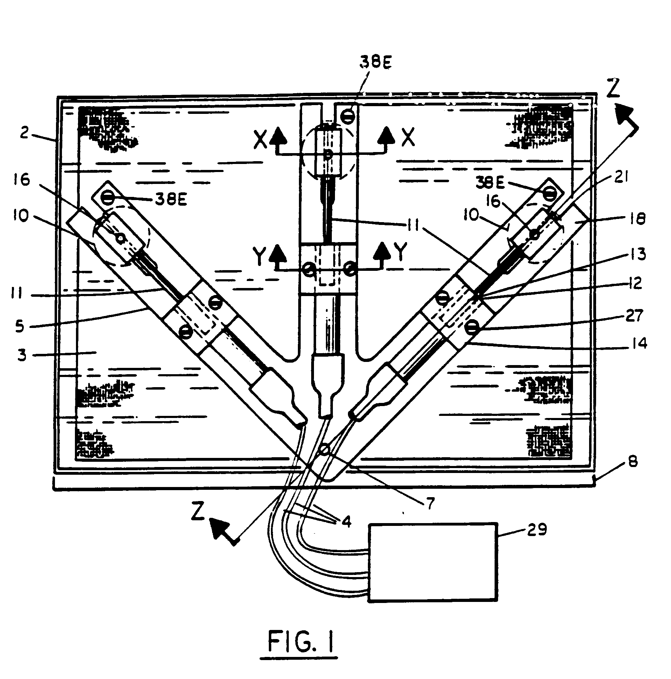

Figure 1 is a top view of apparatus according to the invention, shown partly in phantom, having a sensor-supporting plate (18) in the form of three connected "fingers" (5) individually equipped with insulated electrical connectors to carry the output from the associated sensor, each finger being supported above a rigid supporting surface or base member (8) by a fixed vertical supporting column (7) and a threaded support (38), of which only the head is seen in Figure 1. The device is arranged in operating position over a testing area on the base member (8) where the laminated body (3), the structural integrity of which is to be evaluated, is located. The testing area may optionally include a liquid-retaining pan or tank (2) as shown.

Figure 2 is a longitudinal schematic section, partly in phantom, along line z--z in Figure 1, showing sensor-supporting finger (5A) in operating position over the laminated body (3A) on base member (8A). At its fixed or reference end, the said finger is supported by a threaded vertical column (7A) having a supporting collar or stop (26A) and an extension in the form of a pin that is adapted to penetrate through the layers of the laminated body as shown to prevent relative movement between the sensor finger and a laminated body to be tested. The opposite end of each finger is supported by threaded support (38A) that is threaded through the finger 5(A) and rests slidably on the surface of the laminated body (3A), so that the level of the finger can be adjusted to maintain the sensor mounted on insulating pad 20(A) in alignment with shaft 11(A).

Figure 3 is a full schematic cross sectional view of a sensor finger of the type shown in Figure 1 along line x--x.

Figure 4 is a full schematic cross sectional view of a sensor finger of the type shown in Figure 1 along line y--y.

Figure 5 is a full longitudinal schematic section of a modified version of the monitoring device shown in Figure 1, in which the three sensor fingers (5D) are rotatably and slidably mounted on a vertical extension of column 7D.

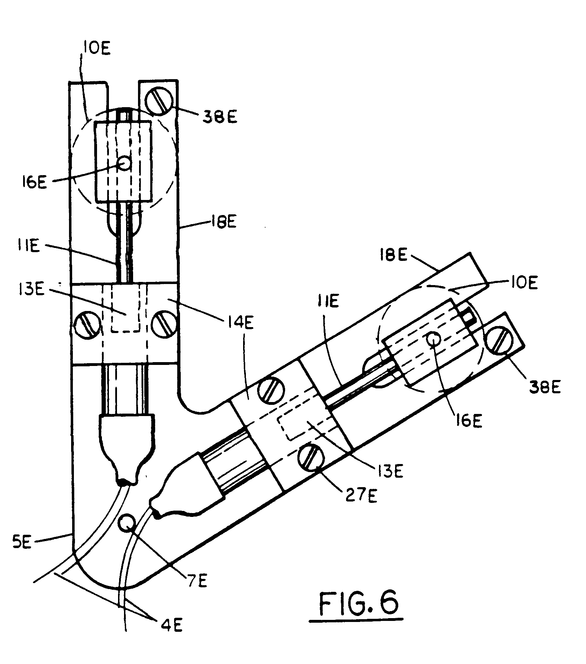

Figure 6 demonstrates a further modification of the device shown in Figure 1, in which a sensor-supporting plate in the form of two sensor fingers is used. The angle between the fingers preferably varies from 45° to 90°.

Figure 7 (A)(B)(C) demonstrates three control graphs representing carpet tile distortion in the machine-, diagonal-and cross directions on a fully annealed carpet tile to be used as a typical standard for comparison purposes, the displacement-induced current fluctuation being converted into percentage change in tile dimensions by conventional computerization.

Further reference to Figure 1 shows the slotted supporting plate (18) comprising the three fingers (5) (which of course could be integrated into a single plate having three slots). Associated with each slot (21) is a sensing unit comprising a movable dimensioning element including locating means (not shown in Figure 1), a linking shaft (11), and a sensor (shown only in part and in phantom), in the form of an inductive transducer having a fixed element rigidly connected to its supporting finger by a clamp (14) in the form of an inverted U and screws (27), and electrically connected to a conventional recording device (29) (shown schematically). The linkage coupling block is T-shaped in section with its lower part being slidably received in slot (21A) and its upper part being secured to one end of linking shaft (11) by set screw (16). The other end of the linking shaft is threaded into a plunger (13) (shown in phantom), which constitutes the movable element of the transducer. The plunger (13) is aligned for reciprocal movement within an impedance coil (not shown in Figure 1) that constitutes the fixed element of the transducer, the output of which is responsive to displacement of the movable element relative to the fixed element.

The current flow induced by movement of the dimensioning element, linking shaft (11) and plunger (13) is passed through the leads (4) to the recording device (29), which may be a movable stylus and paper roll, using a horizontal time axis, or an electronic recorder. Preferably, the information can be conveniently computerized and recorded as dimensional change on a percentage basis, and the individual outputs of each of the elements can be integrated into data reflecting the angular relationships of the fingers (5).

Further reference to Figure 2 illustrates further details of a sensor finger of the type shown in Figure 1, identical arabic numbers indicating the same or similar components but with the suffix "A". Vertical column (7A), being fixed in a reference position by the penetration of its pin extension through the layers of the laminated body, to prevent relative movement between finger 5(A) and the laminated body to be tested, ensures that the fixed element of the transducer is adapted to be rigidly connected to the laminated body. The movable dimensioning element shown includes three pointed probes (17A) (shown in detail in Figure 3) projecting downward from a leveling disk 24(A) and adapted to penetrate the body to be evaluated to a predetermined depth; they are threadably connected by stud 28(A) to a linkage coupling block (10) (shown partly in phantom). The probes (17A) are shown superficially resting on the upper surface of a carpet tile in face down orientation, ready for penetration into the tile to evaluate distortions or residual tensions from a prior annealing step (see Example); also shown in Figure 2 are optional ridges (19A) for positioning the tile within an optional test tank (2A), in which the tile is shown immersed in water (25A). The ambient temperature can be controlled by placing the entire unit in an oven , with or without the tank (2A). Depending on the thickness of the laminated body being tested, the alignment of the linking shafts (11) and plungers (13) with the respective impedence coils, is achieved by turning the threaded supports 38(A) to adjust the level of the slotted ends of fingers 5(A) with respect to the height of the column 7(A) at its other end.

Further reference to Figure 3 illustrates additional details of the end structure of one of the slotted ends of supporting frame (18B), having slot (21B), through which endthreaded stud (28B) connects the leveling disk (24B) to the coupling block (10B), which is secured onto the distal end of linking shaft (11B) by set screw (16B). The distance between the linking shaft and the bottom faces of the upper flanges of the linkage coupling block is such that the said faces rest on the finger 5(B) when the the linking shaft and plunger (13) are in proper alignment with the associated impedence coil.

Further reference to Figure 4 shows additional details of the structure of the impedence coil and plunger (13C) (in blank schematic), in which the coil is insulated by rubber pads (20C) and held in place by clamp (14C) and screws (27C).

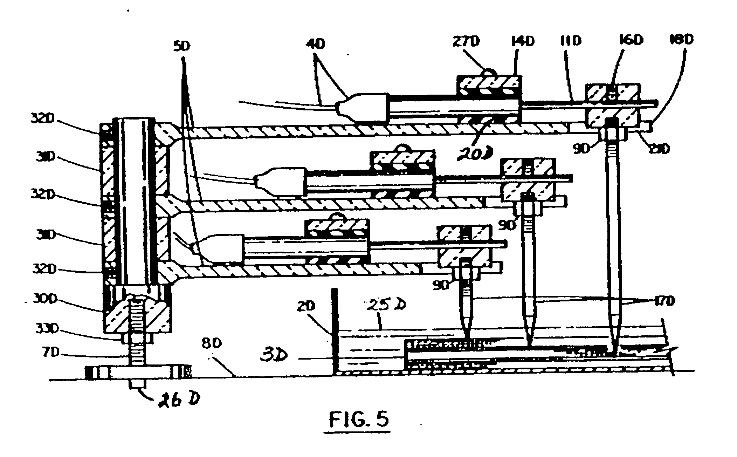

Further reference to Figure 5 shows additional details of the modified version of the device shown in Figure 1, in which three separate sensor fingers (5D), replacing sensor-supporting plate (18), are rotatably and slidably mounted on a vertical extension of supporting column 7D. The fingers (5D) are of different lengths and each is separately adjustable to control the location of the pointed end of one of the threaded probes (17D) to permit controlled penetration into different laminate layers or components at desired positions; this is variously accomplished by manual vertical adjustment and rotation of fingers (5D), use of locking nuts (9D), and adjustment to horizontal configuration by use of adjustments in modified threaded vertical supporting column (7D). The depth of probe penetration desired depends upon the the orientation, face up or down, of the laminated body and the nature of the information desired.

Supporting column (7D) includes a horizontal flange secured to the base (8D) that serves to maintain it in a vertical position and the fingers (5D) in an accurately horizontal position. Unlike the supporting column (7D) of Figures 1 to 4, with a pointed pin extending through the layers of the laminated body to prevent relative movement between the sensor-supporting finger and the laminated body, the fixed reference position for fingers (5D) is located outside the periphery of the testing area and therefore ridges, such as those shown in Figure 2 as (19A), or other protuberances are required within the test area to secure the laminated body against movement relative to the reference location of supporting column (7D). The induction transducers or other sensor units as shown in Figures 1, 2 and 4, and the recording means shown in Figure 1 will be the same.

Preferred positions for such three-fingered devices are at 45° with orientation along the length, the width, and on the diagonal of the test laminate or tile, at least one arm preferably being in a machine direction.

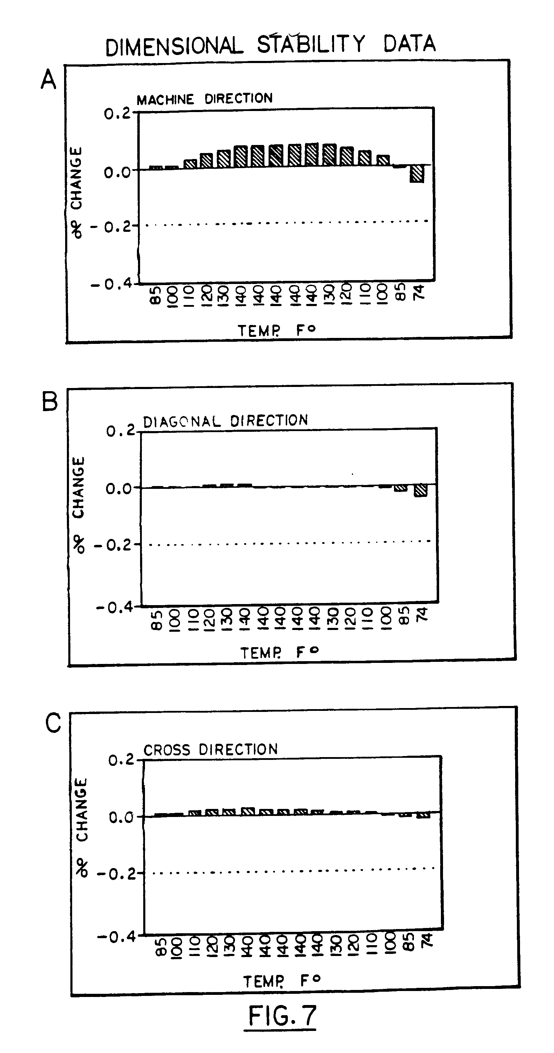

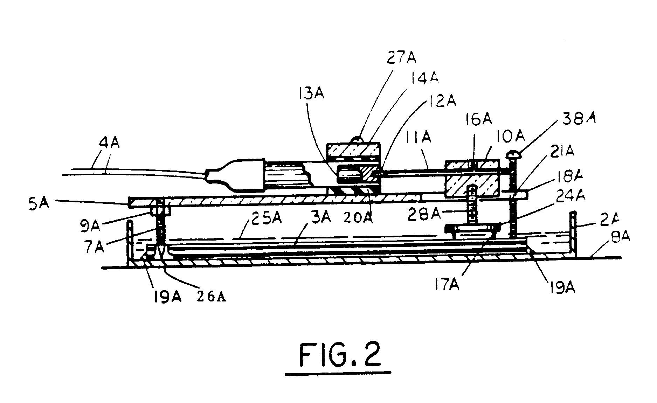

Immersion of a number of carpet tiles for a given length of time (usually 2 hours) in water (a) at ambient, (b) then 22.8°C (73°F) and (c) then at 60°C (140°F) temperatures, followed by drying will result in several control graphs as shown in Figure 7.

The following example describes tests on eight unannealed nylon-faced carpet tiles obtained from Burlington Industries, Glasgow, Virginia, from the same batch number, having EVA-based backing weighing 254.0 gm/m$^2$ (75oz/1yd$^2$) adhered with a standard hot melt adhesive weighing 102 gm/m$^2$ (30oz/yd$^2$).

Example

The tile samples, hereinafter identified as S-1 through S-8, are annealed at 93.3°C (200°F) for periods varying from 5 minutes to 20 minutes, then air cooled to room temperature, and tested, using a testing device essentially the same as that described in Figures 1-4. No water-filled test tank (2) is used, and the device (except recording device (29)) is mounted wholly within a thermostatically-controlled hot air oven. Each test tile is set face down in tank (2) and heated at a rate of about -6.7°C (20°F) per minute up to 60°C (140°F). After two (2) hours the oven is cooled at the same rate to ambient temperature. For this test the probes are set essentially as shown in Figure 2 and the results (in a machine direction) are recorded in Table I below as per cent change correlated by computer to current fluctuations at various temperatures. For test purposes it is assumed that the heating and cooling phases of a perfectly annealed carpet tile should approximate mirror images (See Figure 7A) and that differences in % of change during in the cooling phase compared with the heating phase are attributed primarily to residual tensions within the tile that have caused slippage between the layers.

**TABLE I**

| Sample | Annealing Time In Minutes | % Change In Machine Direction(*3) | | | | | | | |
|---|---|---|---|---|---|---|---|---|---|
| | | 29.4° | 43.3° | 48.9° | 60° | 60° | 48.9° | 43.3° | 29.4° |
| S-1 | 0  | +.012 | +.025 | +.037 | +.050 | -.030 | -.110 | -.140 | -.230 |
| S-2 | 0  | +.011 | +.027 | +.035 | +.050 | -.025 | -.100 | -.135 | -.225 |
| S-3 | 5  | +.012 | +.030 | +.045 | +.051 | +.035 | 0     | -.030 | -.125 |
| S-4 | 5  | +.015 | +.135 | +.040 | +.052 | +.040 | +.001 | -.025 | -.130 |
| S-5 | 10 | +.025 | +.050 | +.051 | +.074 | +.095 | +.050 | +.025 | -.065 |
| S-6 | 10 | +.025 | +.045 | +.052 | +.073 | +.100 | +.050 | +.025 | -.070 |
| S-7 | 20 | +.001 | +.025 | +.060 | +.070 | +.065 | +.050 | +.052 | 0     |
| S-8 | 20 | +.005 | +.028 | +.055 | +.065 | +.070 | +.050 | +.050 | -.001 |

(*3)  "+" indicates title expansion "-" indicates contraction from initial ambient condition based on oven readings in degrees F°.
29.4°C=85°F; 43.3°C=110°F; 48.9°C=120°F; 60°C=140°F.

## Claims

1. A method for evaluating the structural integrity and stability of soft laminated bodies, including the steps of locating the laminated body (3A) on a rigid supporting surface (8A), supporting a sensor (13A) above the fixed laminated body, the sensor having a fixed element (14A) rigidly connected to the laminated body (3A) by a sensor supporting plate (18A) supported by a column (7A) located in a reference position fixed with respect to the laminated body and a shaft (11A) rigidly linked to a dimensioning element (24A + 17A), the sensor producing an output that is responsive to the displacement of the shaft (11A) relative to the column (7A), connecting the dimensioning element to the laminated body at a point spaced from the column (7A), and recording indications of displacement that are output from the sensor, characterized in that the laminated body is placed in a testing area on the rigid supporting surface (8A), the dimensioning element is connected to the laminated body by penetrating it to a predetermined depth by pointed probes (17A) projecting downward from the dimensioning element, the laminated body (3A) is exposed to change in ambient conditions in the testing area, and the recorded measure of displacement of the shaft (11A) is compared with standards representing structural characteristics within the laminated body.

2. An apparatus for carrying out the method as claimed in claim 1, including a testing area on the rigid supporting surface (8A) for the laminated body (3A) to be evaluated, a sensor (13A) having a fixed element (14A) above and adapted to be rigidly connected to the laminated body (3A) by a sensor-supporting plate (18A) supported by column (7A) located in a fixed reference position and a shaft (11A) rigidly linked to a dimensioning element (24A + 17A), the sensor (13A) producing an output that is responsive to displacement of the shaft (11A), the dimensioning element being adapted to be connected to the laminated body (3A) to be evaluated at a point spaced from the column (7A), and recording means for storing the indications of displacement that are output from the sensor, characterized in that said testing area is located on the rigid supporting surface (8A) under the dimensioning element to receive the body to be evaluated, the dimensioning element includes pointed probes (17A) projecting downward and adapted to penetrate the body to be evaluated to a predetermined depth, and temperature-controlling means are provided for adjusting the ambient temperature in the testing areas.

3. Apparatus as claimed in claim 2, further characterized in that the column (7A) is located inside the periphery of the testing area and extends from the end of the sensor-supporting plate (18A) and is inserted through the layers of the laminated body (3A) to prevent relative movement between the pointed probes (17A) and the laminated body (3A).

4. Apparatus as claimed in claims 2 or 3, further characterized in that three sensors (13A) and dimensioning elements (24A + 17A) are radially located on a sensor-supporting plate (18A) having corresponding slots to slidably receive the linkages between the sensors (13A) and the respective dimensioning elements.

5. Apparatus as claimed in claims 2, 3 or 4, further characterized in that the sensor-supporting plate (18A) is in the form of three joined fingers each supporting one of the sensors (13A) and radially aligned with its associated dimensioning element (24A + 17A).

6. Apparatus as claimed in claims 4 or 5, further characterized in that each of the linkages between the sensors (13A) and the respective dimensioning elements (24A + 17A) includes a shaft (11A) connecting the sensor (13A) to a linkage coupling block (10A) and the sensor-supporting plate (18A) has adjustable supporting means at the end adjacent the slots adapted to adjust the height of the slot above the laminated body so that the shaft (11A) is in proper alignment with the fixed element (14A) of the sensor.

7. Apparatus as claimed in claim 6, further characterized in that each linkage coupling block (10A) is so dimensioned that it presents a surface adapted to slide on the sensor-supporting plate (18A) when the shaft (11A) is in proper alignment with the fixed element (14A) of the sensor (13A).

## Patentansprüche

1. Verfahren zur Beurteilung der strukturellen Integrität und Festigkeit von weich laminierten Körpern, welches die Schritte aufweist, daß man den laminierten Körper (3A) auf einer starren Trägeroberfläche (8A) anordnet, einen Sensor (13A) über dem fixierten laminierten Körper anordnet, wobei der Sensor ein fixiertes Element (14A) aufweist, das starr mit dem laminierten Körper (3A) verbunden ist, und zwar durch eine Sensor-Trägerplatte (8A), die durch einen Ständer (7A) gestützt wird, der sich in einer Referenzposition befindet, die hinsichtlich des laminierten Körpers fixiert ist, und mit einer Achse (11A), die starr mit einem Dimensionierungselement (24A + 17A) verbunden ist, wobei der Sensor ein Ausgabesignal produziert, daß die Antwort auf die Verschiebung der Achse (11A) relativ zum Ständer (7A) ist, das Dimensionierungselement mit dem laminierten Körper an einem Punkt verbindet, der von dem Ständer (7A) beabstandet ist, und Anzeichen von Verschiebung aufzeichnet, die Ausgabesignal des Sensors sind, dadurch gekennzeichnet, daß man den laminierten Körper auf einer Untersuchungsfläche der starren Trägeroberfläche (8A) anordnet, das Dimensionierungselement mit dem laminierten Körper verbindet, und zwar indem man es bis zu einer vorbestimmten Tiefe mittels spitzer Fühler (17A), die aus dem Dimensionierungselement nach unten hervorragen, in diesen eindringen läßt, den laminierte Körper (3A) Änderungen der Umgebungsbedingungen in der Untersuchungsfläche aussetzt und das aufgezeichnete Maß für die Verschiebung der Achse (11A) mit Standards vergleicht, die strukturelle Eigenschaften innerhalb des laminierten Körpers darstellen.

2. Vorrichtung zur Durchführung des Verfahrens nach Anspruch 1, die folgendes aufweist: eine Untersuchungsfläche auf der starren Trägeroberfläche (8A) für den zu beurteilenden laminierten Körper (3A), einen Sensor (13A) mit einem fixierten Element (14A) darüber und so angepaßt, daß es starr mit dem laminierten Körper (3A) verbunden ist, und zwar mittels einer Sensor-Trägerplatte (18A), die mittels eines Ständers (7A) gestützt wird, der sich an einer fixierten Referenzposition befindet und mit einer Achse (11A), die starr mit einem Dimensionierungselement (24A + 17A) verbunden ist, wobei der Sensor (13A) ein Ausgangssignal produziert, das die Antwort auf Verschiebung der Achse (11A) ist, wobei das Dimensionierungselement so angepaßt ist, daß es mit dem zu beurteilenden laminierten Körper (3A) an einem von dem Ständer (7A) beabstandeten Punkt verbunden werden kann, und eine Aufzeichnungseinrichtung zur Speicherung der Anzeichen von Verschiebung, die das Ausgangssignal des Sensors sind, dadurch gekennzeichnet, daß die Untersuchungsfläche auf der starren Trägeroberfläche (8A) angeordnet ist, und zwar unter dem Dimensionierungselement zur Aufnahme des zu beurteilenden Körpers, wobei das Dimensionierungselement spitze Fühler (17A) aufweist, die sich nach unten erstrecken und so angepaßt sind, daß sie in den zu beurteilenden Körper bis zu einer vorbestimmten Tiefe eindringen, und Temperaturregeleinrichtungen zur Einstellung der Umgebungstemperatur in der Untersuchungsfläche vorgesehen sind.

3. Vorrichtung nach Anspruch 2, außerdem dadurch gekennzeichnet, daß der Ständer (7A) innerhalb der Peripherie der Untersuchungsfläche angeordnet ist und sich vom Ende der Sensor-Trägerplatte (18) erstreckt und durch die Schichten des laminierten Körpers (3A) hindurchgeführt ist, um die relative Bewegung zwischen den spitzen Fühlern (17A) und dem laminierten Körper (3A) zu verhindern.

4. Vorrichtung nach den Ansprüchen 2 oder 3, außerdem dadurch gekennzeichnet, daß drei Sensoren (13A) und Dimensionierungselemente (24A + 17A) radial auf einer Sensor-Trägerplatte (18A) angeordnet sind, die korrespondierende Schlitze zur verschiebbaren Aufnahme der Bindungen zwischen den Sensoren (13A) und den entsprechenden Dimensionierungselementen aufweist.

5. Vorrichtung nach den Ansprüchen 2,3 oder 4, außerdem dadurch gekennzeichnet, daß die Sensor-Trägerplatte (18A) die Form dreier verbundener Finger hat, von denen jeder einen der Sensoren (13A) trägt, und radial mit seinem zugehörigen Dimensionierungselement (24A + 17A) ausgerichtet ist.

6. Vorrichtung nach den Ansprüchen 4 oder 5, außerdem dadurch gekennzeichnet, daß jede der Verbindungen zwischen den Sensoren (13A) und den entsprechenden Dimensionierungselementen (24A + 17A) eine Achse (11A) aufweist, welche den Sensor (13A) mit einem Verbindungskupplungsblock (10A) verbindet, und die Sensor-Trägerplatte (18A) einstellbare Trägereinrichtungen am Ende benachbart zu den Schlitzen aufweist, die so eingestellt sind, daß sie die Höhe des Schlitzes über dem laminierten Körper so anpassen, daß die Achse (11A) sauber mit dem fixierten Element (14A) des Sensors ausgerichtet ist.

7. Vorrichtung nach Anspruch 6, außerdem dadurch gekennzeichnet, daß jeder Verbindungskupplungsblock (10A) so dimensioniert ist, daß er eine Oberfläche darstellt, die so angepaßt ist, daß sie auf der Sensor-Trägerplatte (18A) leiten kann, wenn die Achse (11A) mit dem fixierten Element (14A) des Sensors (13A) sauber ausgerichtet ist.

**Revendications**

1. Procédé pour évaluer l'intégrité et la stabilité structurelles de corps stratifiés lisses, comprenant les étapes de positionnement du corps stratifié (3A) sur une surface support rigide (8A), supportant un détecteur (13A) au-dessus du corps stratifié fixe, le détecteur ayant un élément fixe (14A) lié rigidement au corps stratifié (3A) par une plaque support de détecteur (18A) supportée par une colonne (7A) positionnée en position de référence fixe par rapport au corps stratifié, et un arbre (11A) lié rigidement à un élément de mesure (24A + 17A), le détecteur produisant une sortie en réponse au déplacement de l'arbre (11A) par rapport à la colonne (7A), liant l'élément de mesure au corps stratifié à un point espacé de la colonne (7A), et enregistrant les indications de déplacement qui sont sorties du détecteur, caractérisé en ce que le corps stratifié est positionné sur une zone de tests, sur une surface support rigide (8A), l'élément de mesure est connecte au corps stratifié en y pénètrant d'une profondeur prédéterminée par des sondes pointues (17A) se projetant vers le bas à partir de l'élément de mesure, le corps stratifié (3A) est exposé aux modifications des conditions ambiantes dans la zone de test, et la mesure du déplacement enregistrée de l'arbre (11A), est comparée avec les caractéristiques standards de structure dans le corps stratifié.

2. Dispositif pour exécuter le procédé selon la revendication 1, comprenant une surface de tests sur une surface support rigide (8A) pour le corps stratifié (3A) à évaluer, un détecteur (13A) ayant un élément fixe (14A) au-dessus et conçu pour être connecté rigidement au corps stratifié (3A) par une plaque support de détecteur (18A) supportée par la colonne (7A) positionnée en position de référence fixe et un arbre (11A) rigidement relié à un élément de mesure (24A + 17A), le détecteur (13A) produisant une sortie en réponse au déplacement de l'arbre (11A), l'élément de mesure étant conçu pour être lié au corps stratifié (3A) à évaluer, en un point espacé de la colonne (7A), et des moyens d'enregistrement pour enregistrer les indications du déplacement qui sont émises par le détecteur, caractérisé en ce que ladite surface de tests est positionnée sur la surface support rigide (8A) sous l'élément de mesure pour recevoir le corps à évaluer, l'élément de mesure comporte des sondes pointues (17A) se projetant vers le bas et conçues pour pénétrer le corps à évaluer d'une profondeur prédéterminée, et des moyens de commande de température sont fournis pour régler la température ambiante dans la surface de tests.

3. Dispositif selon la revendication 2, caractérisé de plus en ce que la colonne (7A) est positionnée à l'intérieur du périmètre de la surface de tests et s'étend depuis l'extrémité de la plaque support de détecteurs (18A), et est insérée à travers les couches du corps stratifié (3A), pour empêcher le mouvement relatif entre les sondes pointues (17A) et le corps stratifié (3A).

4. Dispositif selon l'une quelconque des revendications 2 ou 3, caractérisé de plus en ce que trois détecteurs (13A) et des éléments de mesure (24A + 17A) sont positionnés radialement sur une plaque support de détecteurs (18A), ayant des fentes correspondantes pour recevoir de manière coulissante les liaisons entre les détecteurs (13A) et les éléments de mesure respectifs.

5. Dispositif selon l'une quelconque des revendications 2, 3 ou 4, caractérisé de plus en ce que la plaque support de détecteurs (18A) est sous forme de trois doigts joints, supportant chacun l'un des détecteurs (13A), et aligné radialement avec l'élément de mesure associé (24A + 17A).

6. Dispositif selon l'une quelconque des revendications 4 ou 5, caractérisé de plus en ce que chacune des liaisons entre les détecteurs (13A) et les éléments de mesure respectifs (24A + 17A) comprend un arbre (11A) reliant le détecteur (13A) à un bloc d'accouplement de liaison (10A) et la plaque support de détecteurs (18A) a des moyens supports réglables à l'extrémité adjacente aux fentes conçu pour régler la hauteur de la fente au-dessus du corps stratifié, de façon à ce que l'arbre (11A) soit aligné convenablement avec l'élément fixe (14A) du détecteur.

7. Dispositif selon la revendication 6, caractérisé de plus en ce que chaque bloc d'accouplement de liaison (10A) est dimensionné de telle façon qu'il présente une surface conçue pour coulisser sur la plaque support de détecteurs (18A), lorsque l'arbre (11A) est aligné convenablement avec l'élément fixe (14A) du détecteur (13A).

FIG. I

FIG.3

FIG. 4

FIG. 5

FIG.6

## DIMENSIONAL STABILITY DATA

FIG. 7

FIG.2